# Europäisches Patentamt
# European Patent Office
# Office européen des brevets

(19)

(11) Veröffentlichungsnummer: **0 089 486**
**B1**

(12) **EUROPÄISCHE PATENTSCHRIFT**

(45) Veröffentlichungstag der Patentschrift:
**18.12.85**

(21) Anmeldenummer: **83101384.2**

(22) Anmeldetag: **14.02.83**

(51) Int. Cl.⁴: **B 01 J 8/18,** B 01 J 8/20, B 01 J 8/44, B 01 J 47/10, B 01 D 11/00 // B01D9/00

(54) **Wirbelzellenkolonne.**

(30) Priorität: **19.03.82 DE 3210117**

(43) Veröffentlichungstag der Anmeldung:
**28.09.83 Patentblatt 83/39**

(45) Bekanntmachung des Hinweises auf die Patenterteilung:
**18.12.85 Patentblatt 85/51**

(84) Benannte Vertragsstaaten:
**AT BE CH DE FR GB IT LI NL**

(56) Entgegenhaltungen:
**DE - A - 2 355 106**
**DE - A - 2 735 972**
**DE - C - 963 864**
**GB - A - 728 791**
**GB - A - 1 000 553**
**GB - A - 1 126 878**

(73) Patentinhaber: **Schreiber, Georg, Dipl.-Ing., Kiefernweg 7, D-5000 Köln 50 (DE)**

(72) Erfinder: **Schreiber, Georg, Kiefernweg 7, D-5000 Köln 50 (DE)**
Erfinder: **Lob, Heinrich, Bergheimer Strasse 38, D-5210 Troidorf-Eschmar (DE)**

## Beschreibung

Die Erfindung bezieht sich auf eine Wirbelzellenkolonne der im Oberbegriff des Anspruches 1 angegebenen Art.

Derartige Kolonnen sind als Flachboden-Wirbelzellenkolonnen zur Durchführung von Verfahren zum Stoffaustausch, z.B. zur Entfernung von nebenprodukthaltigen Mutterlaugen, die am Kristallisat in Form der sogenannten Restfeuchte anhaften, angewandt worden (vgl. DE-PS Nr. 2355106). Der Einbau dieser schrägen Flachböden, die einerseits mechanisch stabil in der Kolonne befestigt werden müssen, andererseits zwischen Kolonneninnenwand und dem geneigten, den Hauptteil des Kolonnenquerschnitts überdeckenden Boden, Öffnungen zum Hindurchtreten des Fluids aufweisen, ist nicht problemlos.

Zur Vermeidung von Leckströmen zwischen diesen Flachböden oder Platten und der Kolonneninnenwand bei nicht dichtem Abschluss, die die Gefahr des Absetzens von Feststoffpartikel bei heterogenen Stoffsystemen beinhaltet, wurde vorgeschlagen, die Böden so auszubilden, dass sie eine knickfrei gekrümmte Fläche bilden, deren Rand unter Spannung gegen die Kolonnenwand drückt. In den derart ausgebildeten schräg verlaufenden Böden sind eine oder mehrere Öffnungen zum Hindurchtreten der auftretenden Stoffströme vorgesehen (vgl. DE-OS Nr. 2735972).

Bei diesen bekannten Vorrichtungen ist der Kolonnendurchmesser auf etwa 1,5 m beschränkt. Der Wirkungsgrad von Wirbelzellenkolonnen mit ebenen, schräggeneigten Platten oder auch mit gekrümmten Platten, ausgedrückt als die Höhe einer theoretischen Stufe zwischen zwei Böden, kann nicht für alle Verwendungen voll zufriedenstellen.

Auch die mit den plattenförmigen, schräggestellten Einbauten in der Kolonne verbundenen mechanischen Schwierigkeiten veranlassten dazu, nach verbesserten Lösungen auf dem eingangs angeführten technischen Gebiet zu suchen.

Es stellte sich daher die Aufgabe, eine Wirbelzellenkolonne mit verbesserter Leistung, vergrösserter Querschnittsfläche und vereinfachtem Einbau der Böden in die Kolonne zu entwickeln.

Diese Aufgabe wird mit der Erfindung gelöst. Sie besteht darin, dass bei einer vertikalen Wirbelzellenkolonne der eingangs genannten Art die Böden entsprechend den Merkmalen des Kennzeichens der Ansprüche 1 oder 10 ausgebildet sind und die im Kennzeichen der Ansprüche 1 oder 10 bezeichnete Anordnung in der Kolonne sowie deren gegenseitige Anordnung aufweisen.

Erfindungsgemäss sind die so ausgebildeten Böden in der Kolonne abwechselnd mit den konkaven bzw. konvexen Seiten der Böden nach oben ausgerichtet. Die zentrale Öffnung des Bodens dient dem Durchtritt eines Teilstromes des Fluids beim Betrieb der Kolonne. Dabei bilden jeweils zwei mit ihren konvexen Seiten gegenüberliegende Böden eine Trennkammer, in der eine Auftrennung infolge der auftretenden Wirbelströmung in behandelnde Flüssigkeit und behandelte Flüssigkeit oder Suspension erfolgt. Die behandelnde Flüssigkeit strömt durch die zwischen dem Umfangsbogen der gedachten Kegelgrundfläche oder Pyramidengrundfläche des Bodens und dem inneren Kolonnenumfang befindliche Öffnung in die nächsthöhere Kammer. Die behandelte Flüssigkeit oder Suspension strömt durch die entsprechende Öffnung des unteren Bodens.

In der Trennkammer evtl. entstandene Instabilitäten der Strömung, verursacht durch lokale Partikelkonzentrationen und daraus resultierende Dichtedifferenzen, werden in der folgenden, aus zwei mit ihren konkaven Seiten einander zugekehrten Böden gebildeten, Mischkammer durch die hier auftretende Vermischung wieder abgebaut. Aus dieser Kammer treten ein Aufstrom sowie ein Abstrom durch die Öffnungen der Böden in die obere bzw. untere benachbarte Trennkammer ein.

Die Böden werden erfindungsgemäss im Bereich der Umfangslinien der gedachten Grundfläche, die im genannten Bereich zur horizontalen Auflage entsprechend umgebogen sein können, auf Ringen, Ringsegmenten oder Stegen, die am inneren Kolonnenumfang befestigt sind, in einer bevorzugten Ausführungsform, z.B. durch Verschrauben, befestigt.

Gemäss einer speziellen Ausführungsform werden die Böden mittels vom oberen Kolonnenteil zum unteren Kolonnenteil vertikal ausserhalb der Längsachse durch die Böden geführter Halbestäb, z.B. mittels entsprechender Verschraubungen befestigt.

Ferner können in einer bevorzugten Ausführung der erfindungsgemässen Wirbelzellenkolonne die zentralen Öffnungen der mit der konkaven Seite nach unten gerichteten Böden durch Mittelstücke, z.B. mittels eines in der Längsachse der Kolonne verschiebaren Haltestabes, an dem die Mittelstücke befestigt sind, teilweise geschlossen werden, so dass die Kolonne sehr leicht verschiedenen Betriebsbedingungen angepasst werden kann. Das teilweise Schliessen der zentralen Öffnungen kann auch durch Verstellen, z.B. an Halterungen an der Innenwand der Kolonne oder durch Verschraubungen an den Böden erfolgen.

Die Böden können zusammen mit den Mittelstücken sowie den Ringen oder Stegen, die Berührung mit der Kolonneninnenwandung haben, eine in ihrer Gesamtheit, um beispielsweise die halb Höhe der zwischen zwei Böden liegenden Distanz, nach oben verschiebbare Verbundkonstruktion bilden. Dadurch kann die Kolonne ggf. von Ankrustungen zu behandelnden Produktes, wie sie in bestimmten Bereichen auftreten können, freigehalten werden. Die Böden selbst haben bei der vorgeschlagenen Vorrichtung keine direkte Berührng mit der Kolonneninnenwand und können daher ausgebaut oder erneuert werden.

Durch zackenförmige Ausnehmungen der Böden im Bereich der Umfangslinien der gedachten Grundfläche wird eine verbesserte Einstellbarkeit der Durchtrittsfläche zwischen den Umfangslinien der gedachten Grundflächen und innerem Kolonnenumfang zwecks Steuerung der Leistung der Kolonne und Anpassung an unterschiedliche Anforderungen ermöglicht.

Die Querschnittsflächen von Wirbelzellenkolonnen mit den bisher bekannten plattenförmigen geneigten ebenen oder gewölbten Böden sind zur Erzielung einer ausreichenden Trennwirkung begrenzt und entsprechen max. Kolonnendurchmessern von etwa 1,5 m. Mit der vorgeschlagenen Ausführung wird eine wesentlich verbesserte Trennwirkung insbesondere bei Kolonnendurchmessern bzw. Innenwandabständen von 0,1 bis 6 m, vorzugsweise 1,5 bis 4 m erzielt. Die Strömung eines betrachteten Volumenelementes in jeder Kammer der erfindungsgemässen Kolonne hat Komponenten in allen drei Raumkoordinaten, wogegen die Strömung in Wirbelzellenkolonnen mit plattenförmigen Böden im wesentlichen nur Komponenten in zwei Raumkoordinaten aufweist. Entsprechend der zwischen den erfindungsgemäss ausgestalteten Böden in den Trennkammern sich von den Öffnungen der Böden in Richtung der peripheren Durchlassfläche vergrössernden Fläche verlangsamt sich die Stromgeschwindigkeit. Dadurch wird ein vorteilhafter Effekt im Hinblick auf die Leistung der Kolonne erzielt.

Dagegen erhöht sich in den jeweils an die Trennkammern anschliessenden Mischkammern die Geschwindigkeit der Flüssigkeitsströmung entsprechend. Es ist vorteilhaft, den Abstand der Umfangsbögen der gedachten Grundflächen zweier benachbarter, mit ihren konkaven Seiten einander zugekehrter Böden, die jeweils eine Mischkammer bilden, 0,1 bis 1,0 mal so gross wie den Abstand der Öffnungen zweier benachbarter, mit ihren konvexen, einander zugekehrter Böden, zu bemessen, d.h., die Mischkammerhöhe bedeutend kleiner, d.h. 0,1 bis 1,0 mal so gross wie die Trennkammerhöhe, auszuführen.

Anwendungen der vorgeschlagenen Wirbelzellenkolonne sind die Durchführung von Wirbelschichtverfahren bei Einleitung von Suspensionen, Gegenstromverfahren, beispielsweise beim Austausch der kontinuierlichen Phase, Gleichstromverfahren, z.B. bei der Durchführung chemischer Reaktionen mit bestimmten Verweilzeiten, von Kristallisationen u.dgl., des Partikelklassierens sowie von Kaskadenverfahren beim Einsatz homogener Flüssigkeiten.

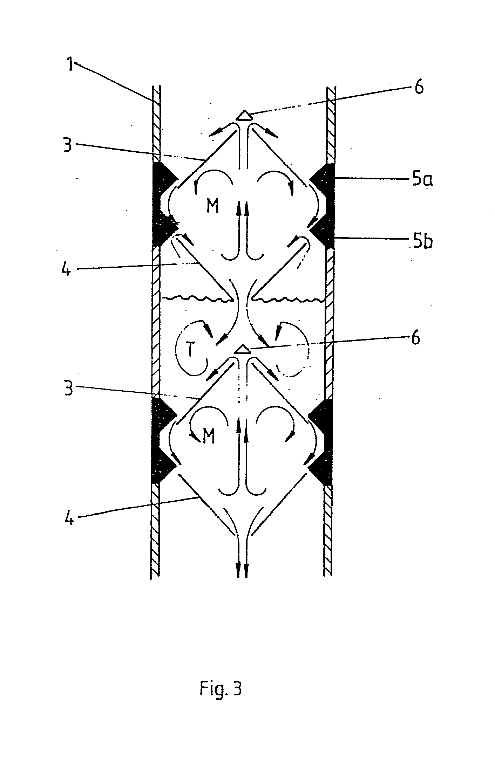

Beim Betrieb der erfindungsgemässen Wirbelzellenkolonne im Gleichstromverfahren können zur Vermeidung der Rückvermischung einige oder alle Rückstromöffnungen wegfallen bzw. geschlossen werden. Die Rückstromöffnungen sind z.B. in Fig. 3 die Ringspaltöffnung zwischen Ring 5b und Boden 4 sowie die Ringöffnung zwischen dem Mittelstück 6 sowie dem Boden 3.

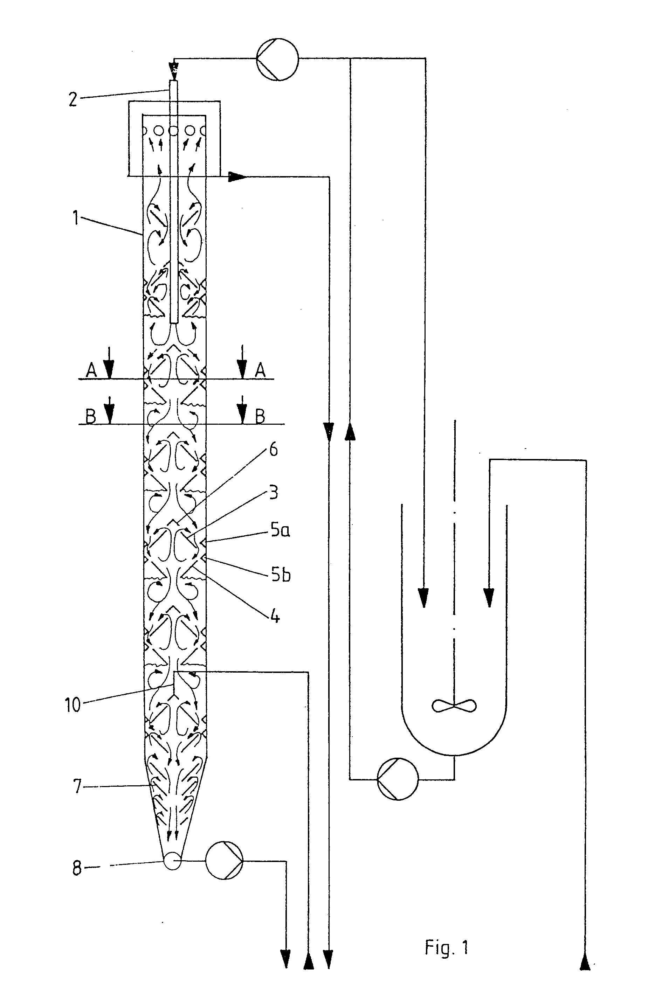

Die Erfindung ist weiter anhand der Fig. 1 bis 5 der Zeichnung erläutert.

Fig. 1 zeigt einen Längsschnitt durch die Achse einer vertikalen Wirbelzellenkolonne 1 mit Einleitungsvorrichtung 2 für die behandelnde Flüssigkeit, z.B. eine Suspension aus einem gerührten Vorlagebehälter über Pumpe und Einlass im oberen Teil der Kolonne, Böden 3 u. 4, Ringe 5a und 5b, Mittelstücke 6, sowie Zufuhr 10 der behandelnden Flüssigkeit im unteren Teil der Kolonne. Der behandelte Stoffstrom wird im unteren Teil der Kolonne mittel schräger Böden 7, z.B. Kegelböden oder Flachböden, eingedickt und mittels einer Austragsvorrichtung 8 über Pumpe ausgetragen und die behandelnde Flüssigkeit im oberen Teil der Kolonne abgezogen.

Fig. 2a zeigt einen Schnitt durch Kolonne 1 längs der Linie A - A, bei dem ein mit der konkaven Seite nach oben gerichteter Boden 4 zu sehen ist und die Projektionen der Resultierenden der Strömungslinien nahe dem Boden 4 in die Zeichenebene angedeutet sind.

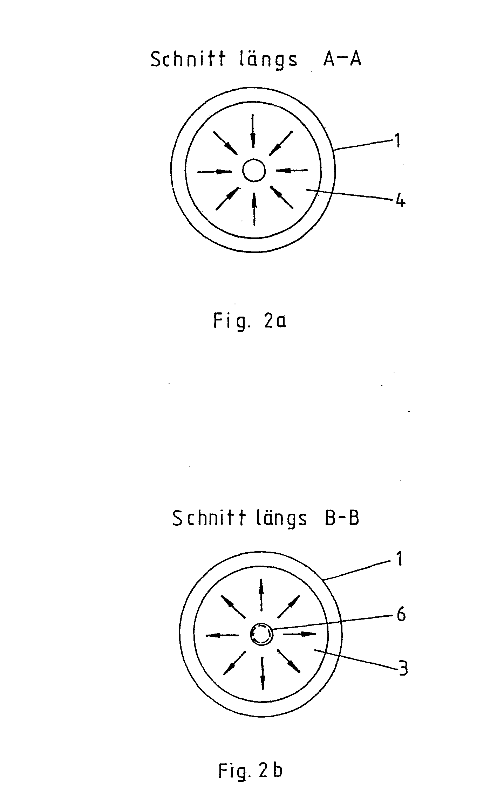

Fig. 2b zeigt einen Schnitt durch Kolonne 1 längs der Linie B - B, bei dem ein mit der konvexen Seite nach oben gerichteter Boden 3 mit Mittelstück 6 zu sehen ist und bei dem die Projektionen der Resultierenden der Strömungslinien nahe dem Boden 3 in die Zeichenebene angedeutet sind.

Fig. 3 zeigt einen Teil einer Wirbelzellenkolonne 1 im Längsschnitt in stark schematisierter Darstellung mit zwei Böden 3 und zwei Mittelstücken 6 über den beiden Böden 3 und zwei Böden 4 sowie eine zwischen den Böden 3 und 4 gebildete Trennkammer mit den Öffnungen für die Flüssigkeitsströme in den Böden bzw. zwischen den Böden und der Kolonnenwandung mit den Hauptströmungslinien sowie den an der Kolonneninnenwand befestigten Ringen 5a und 5b in schematischer Darstellung.

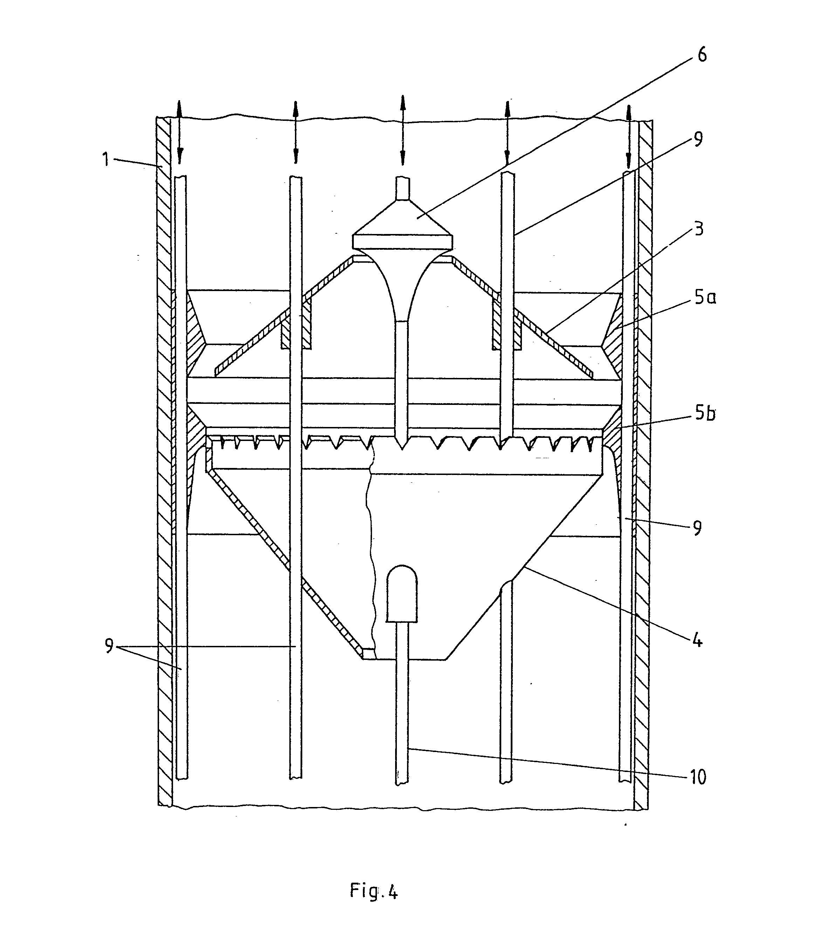

Fig. 4 zeigt einen Teil einer Wirbelzellenkolonne 1 im Längsschnitt mit den Böden 3 und 4, Ringen 5a und 5b, sowie vertikal verschiebbaren Haltestäben 9 und 10, mittels derer die Böden und Mittelstücke 6 separat oder gemeinsam, ggf. zusammen mit den Ringen, als Verbundkonstruktion bewegt werden können. Boden 4 ist mit zackenförmigen Ausnehmungen versehen.

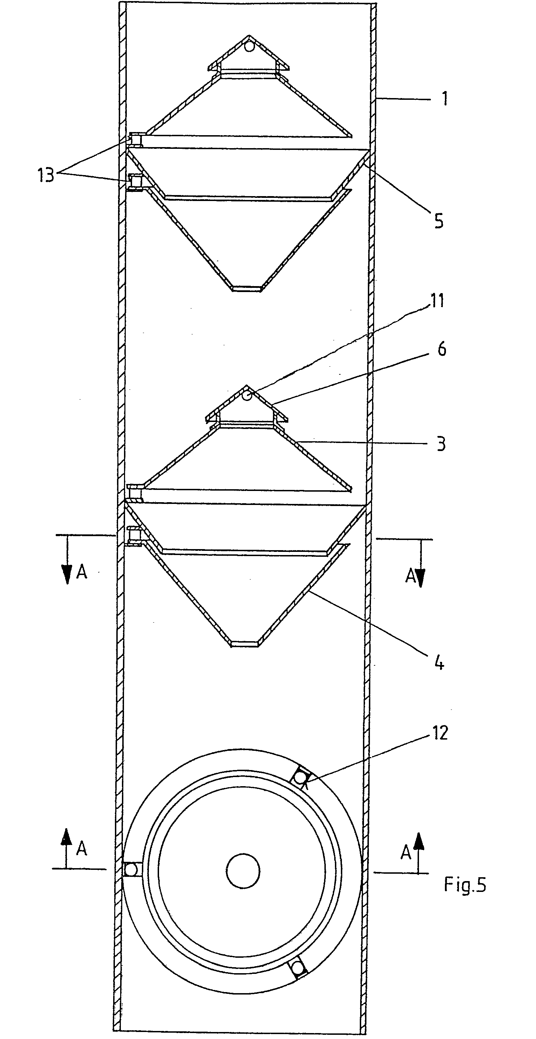

Fig. 5 zeigt einen Teil einer Wirbelzellenkolonne 1 im Längsschnitt mit eingeklapptem Querschnitt mit den Böden 3 und 4, Ringen 5, Mittelstücken 6 mit Entlüftungsöffnungen 11, Ringsegmenten oder Halterungen 12, die am inneren Kolonnenumfang befestigt sind und Distanzstücken 13.

Die Kolonnen können im Bereich der unteren angegebenen Durchmesser von etwa 0,1 bis 0,5 m vorteilhaft aus Glas gefertigt sein, wobei die Verbundkonstruktion der Ringe z.B. zwischen Flanschen eingespannt sein kann. Bei Ausführung der Kolonne in Metall kann die Verbundkonstruktion der Ringe 5a und 5b als Teil der Kolonnenwand 1 eingeschweisst sein (vgl. Fig. 3).

## Patentansprüche

1. Vertikale Wirbelzellenkolonne, insbesondere zur Fluidisierung von Feststoffpartikeln in einer Trägerströmung, mit mindestens zwei Böden, die eine oder mehrere Öffnungen zum Hindurchtreten wenigstens eines Stoffstromes freilassen, dadurch gekennzeichnet, dass die Böden als Mantelflächen abgestumpfter gerader Kreiskegel mit einem Öffnungswinkel von etwa 60 bis 150° ausgebildet und symmetrisch zur Längsachse der Kolonne und abwechselnd mit ihren konkaven bzw. konvexen Seiten nach oben ausgerichtet sind und dass die Böden zentrale Öffnungen zum Hidurchtreten eines Stoffstroms aufweisen und zwischen den Umfangsbögen der gedachten Kegelgrundfläche der Böden und dem inneren Kolonnenumfang ringförmige Durchlässe zum Hindurchtreten eines Stoffstromes verbleiben.

2. Wirbelzellenkolonne nach Anspruch 1, dadurch gekennzeichent, dass die konkaven Seiten des obersten und des untersten Bodens nach oben gerichtet sind.

3. Wirbelzellenkolonne nach Anspruch 1, dadurch gekennzeichnet, dass die Böden im Bereich der Umfangsbögen der gedachten Kegelgrundfläche auf Ringen oder Ringsegmenten, die am inneren Kolonnenumfang befestigt sind, so aufliegen oder befestigt sind, dass der Durchtritt eines Stoffstromes zwischen den Umfangsbögen der gedachten Kegelgrundfläche und dem Kolonnenumfang gewährleistet ist.

4. Wirbelzellenkolonne nach Anspruch 1, dadurch gekennzeichnet, dass die Böden mittels vom Kolonnenkopf zum Kolonnensumpf vertikal ausserhalb der Längsachse durch die Böden geführter Haltestäbe befestigt und ggf. mittels der Haltestäbe einzeln oder gemeinsam verschiebbar sind.

5. Wirbelzellenkolonne nach Anspruch 1, dadurch gekennzeichnet, dass die zentralen Öffnungen der mit der konkaven Seite nach unten gerichteten Böden durch Mittelstücke teilsweise geschlossen werden können.

6. Wirbelzellenkolonne nach Anspruch 1, dadurch gekennzeichnet, dass die mit der konkaven Seite nach unten gerichteten Böden eine nach oben verschiebbare Verbundkonstruktion bilden.

7. Wirbelzellenkolonne nach Anspruch 1, dadurch gekennzeichnet, dass die mit der konkaven Seite nach oben gerichteten Böden im Bereich des Umfangsbogens der gedachten Kegelgrundfläche zackenförmige Ausnehmungen aufweisen.

8. Wirbelzellenkolonne nach Anspruch 1, dadurch gekennzeichnet, dass der Durchmesser der Kolonne zwischen 0,1 und 6 m, vorzugsweise 1,5 und 4 m, liegt.

9. Wirbelzellenkolonne nach Anspruch 1, dadurch gekennzeichnet, dass der mittlere Abstand zweier benachbarter, mit ihrer konkaven Seite einander zugekehrter Böden das 0,1 bis 1,0-fache des Abstandes zweier benachbarter, mit ihrer konvexen Seite einander zugekehrter Böden beträgt.

10. Vertikale Wirbelzellenkolonne, insbesondere zur Fluidisierung von Feststoffpartikeln in einer Trägerströmung, mit mindestens zwei Böden, die zentrale Öffnungen zum Hindurchtreten wenigstens eines Stoffstromes aufweisen, dadurch gekennzeichnet, dass der Kolonnenquerschnitt rechteckig ist und die Böden als Mantelflächen abgestumpfter entsprechender Pyramiden mit einem Basiswinkel von etwa 10 bis 50° ausgebildet und symmetrisch zur Längsachse der Kolonne und abwechselnd mit ihren konkaven bzw. konvexen Seiten nach oben ausgerichtet sind und dass die Böden rechteckige Öffnungen zum Hindurchtreten eines Stoffstromes aufweisen und zwischen den Umfangslinien der gedachten Pyramidengrundfläche und dem inneren Kolonnenumfang Durchlassflächen zum Hindurchtreten eines Stoffstromes verbleiben.

## Claims

1. Vertical fluidizing cell column, in particular for the fluidization of solid particles in a conveying stream, with at least two or more plates, which have one or more openings to permit the flow of at least one material stream, thereby characterized, that the plates form the developed surface of the frustum of a cone with an included angle of about 60° to 150° and are symmetrical to the longitudinal axis of the column whereby their concave and convex sides respectively are alternately upwardly directed and that the plates have central openings to permit the entry of a material stream and between the circumferential arcs of the imaginary cone base area of the plates and the inner surface of the column, openings remain for the passage of a material stream.

2. Fluidizing cell column, according to Claim 1, thereby characterized, that the concave sides of the uppermost and lowermost plates are upwardly directed.

3. Fluidizing cell column, according to Claim 1, thereby characterized, that the plates local to circumferential arcs of the imaginary cone base surface sit on, or are secured to, rings or ring segments secured to the inner surface of the column such that the entry of a material stream between the circumferential arcs of the imaginary cone base surface and the inner surface of the column is ensured.

4. Fluidizing cell column, according to Claim 1, thereby characterized, that the plates are secured by support rods extending vertically from the column head to the column sump outside the longitudinal axis and pass through the plates, and as the case may be are individually or collectively movable by means of the support rods.

5. Fluidizing cell column, according to Claim 1, thereby characterized that the average spacing between adjacent plates having concave facing sides 0,1 to 1,0 times the spacing between adjacent plates with convex facing sides.

6. Fluidizing cell column, according to Claim 1, thereby characterized, that the plates with their concave sides facing downwards together form an upwardly movable composite unit.

7. Fluidizing cell column, according to Claim 1, thereby characterized, that the plates with their concave sides facing upwardly have toothed form serrations local to the circumential arcs of the imaginary cone base surface.

8. Fluidizing cell column, according to Claim 1, thereby characterized, that the diameter of the column is between 0,1 and 6 m, preferably 1,5 and 4 m.

9. Fluidizing cell column, according to Claim 1, thereby characterized, that the average spacing between adjacent plates having facing concave side is 0,1 to 1 times the spacing between plates which have facing convex sides.

10. Vertical fluidizing cell column, in particular for fluidizing solid particles in a conveying stream, with at least two plates, which have central openings to permit the entry of at least one material stream, thereby characterized, that the column has a rectangular cross-section and the plates form the developed surface of the frustum of a cone with a base angle of about 10° to 50° and symmetrical to the longitudinal axis of the column and their convex and concave sides are alternately directed upwardly and that the plates have rectangular openings for the entry of a material stream and openings for the flow of a material stream remain between the periphery of the imaginary cone base surface and the inner surface of the column.

## Revendications

1. Une colonne à cellule turbulente, surtout pour la fluidification de particules en matière solide dans un courant porteur, avec deux fonds au moins, laissant libre un ou plusieurs orifices pour le passage d'un courant de matière au moins, caractérisée par le fait que les fonds sont en forme des surfaces latérales des cônes de révolution tronçonnés et droits avec une ouverture de 60 à 150° environ et sont symétriquement à l'axe longitudinal de la colonne et alternativement avec leurs côtés concaves ou convexes orientés vers le haut et que les fonds ont des orifices centraux pour le passage d'un courant de matière et que, entre les arcs périphériques de la surface de base de cône imaginaire et le périmètre intérieur de la colonne, il reste des passages annulaires pour l'entrée d'un courant de matière.

2. Une colonne à cellule turbulente selon revendication 1, caractérisée par le fait que les côtés concaves du fond supérieur et du fond inférieur sont alignés vers le haut.

3. Une colonne à cellule turbulente selon revendication 1, caractérisée par le fait que les fonds dans la zone des arcs périphériques de la surface de base de cône imaginaire sont placés sur ou fixés à des anneaux ou des segments annulaires fixés au périmètre intérieur de la colonne tels que le passage d'un courant de matière entre les arcs périphériques de la surface de base de cône imaginaire et le périmètre de la colonne est assuré.

4. Une colonne à cellule turbulente selon revendication 1, caractérisée par le fait que les fonds sont fixés à l'aide des barres de retenue menées de la tête de la colonne au carter de la colonne verticalement et au-dehors de l'axe longitudinal et à travers les fonds et que le cas échéant ils sont décalables seuls ou ensemble au moyen des barres de retenue.

5. Une colonne à cellule turbulente selon revendication 1, caractérisée par le fait que les orifices centraux des fonds orientés vers le bas avec leur côté concave peuvent être fermés en partie par des pièces moyennes.

6. Une colonne à cellule turbulente selon revendication 1, caractérisée par le fait que les fonds orientés vers le bas avec leur côté concave forment une construction mixte décalable vers le haut.

7. Une colonne à cellule turbulente selon revendication 1, caractérisée par le fait que les fonds orientés vers le haut avec leur côté concave ont des évidements hachés dans la zone de l'arc périphérique de la surface de base de cône imaginaire.

8. Une colonne à cellule turbulente selon revendication 1, caractérisée par le fait que le diamètre de la colonne est entre 0,1 et 6 m, de préférence entre 1,5 et 4 m.

9. Une colonne à cellule turbulente selon revendication 1, caractérisée par le fait que la distance moyenne de deux fonds voisins face l'un à l'autre avec leur côté concave est 0,1 à 1,0 fois la distance de deux fonds voisins faisant face l'un à l'autre avec leur côté convexe.

10. Une colonne verticale à cellule turbulente, surtout pour la fluidification de particules en matière solide dans un courant porteur, avec deux fonds au moins, possédant des orifices centraux pour passage d'un courant de matière au moins et caractérisée par le fait que la section de la colonne est rectangulaire et les fonds sont en forme des surfaces latérales des pyramides tronçonnées avec un angle de base de 10 à 50° environ et sont symétriquement à l'axe longitudinal de la colonne et orientés vers le haut alternativement avec leurs côtés concaves ou convexes et que les fonds ont des orifices rectangulaires pour le passage d'un courant de matière et qu'il reste des surfaces de passage pour le passage d'un courant de matière entre les lignes périphériques de la surface de base de pyramide imaginaire et le périmètre intérieur de la colonne.

Fig. 1

Schnitt längs A-A

1

4

Fig. 2a

Schnitt längs B-B

1

6

3

Fig. 2b

Fig. 3

Fig.4

Fig.5